# EUROPEAN PATENT SPECIFICATION

(11) **EP 1 954 796 B1**
(45) Date of publication and mention of the grant of the patent: **04.01.2012**
(21) Application number: 06829187.1
(22) Date of filing: 28.11.2006
(51) Int. Cl.: C11D 17/00, C11D 3/50, C11D 3/26, B01J 13/22

(54) **IMPROVEMENTS RELATING TO FABRIC TREATMENT COMPOSITIONS**
VERBESSERUNGEN BEI TEXTILBEHANDLUNGSMITTELN
AMELIORATIONS RELATIVES A DES COMPOSITIONS DE TRAITEMENT DE TISSUS

(30) Priority: 02.12.2005 GB 0524659
(43) Date of publication of application: 13.08.2008
(60) Divisional application: 10195807.2
(73) Proprietor: Unilever PLC, London EC4Y 0DY (GB); Unilever N.V., 3013 AL Rotterdam (NL)
(72) Inventor: FERGUSON, Paul, Bebington, Wirral Merseyside CH63 3JW (GB); JONES, Christopher, Clarkson, Bebington, Wirral Merseyside CH63 3JW (GB); MEALING, David, Richard, Arthur, Bebington, Wirral Merseyside CH63 3JW (GB)
(74) Representative: Elliott, Peter William
(86) International application number: PCT/EP2006/011472
(87) International publication number: WO 2007/062833

(56) References cited:
- WO-A-99/36470
- WO-A-02/074430
- WO-A-03/014278
- WO-A-2004/016234
- WO-A-2004/056890
- WO-A1-2005/103216

## Description

### Technical Field

The present invention relates to core shell polymer particles comprising a benefit agent, which is preferably a perfume. It also relates to the use of such particles for delivery to fabric during laundering. The invention will be described with specific reference to the delivery of perfume as the particularly preferred benefit agent although it is not intended to exclude other benefit agents.

### Background of the Invention

Perfume is an expensive component of laundry treatment compositions and many attempts have been made to improved the deposition of perfume during the wash and obtain a longer-lasting release of perfume. There are other expensive benefit agents, for example anti-microbials and lubricants, but perfume accounts for a large proportion of the cost of a laundry cleaning or conditioning composition. One approach to improving the effective deposition of perfume and other materials has been the use of microcapsules. Micro-encapsulation has been proposed for other benefit agents.

EP1502646 A1 (The Procter & Gamble Company) discloses microcapsules for use in liquid detergents having a core and a polyelectrolyte complex shell in the form of a semipermeable membrane having specific bursting force and density properties. The shell is an ionic complex of polycations and poly-anions. The core is a perfume.
EP1244768 B1 (BASF Aktiengesellschaft) discloses microcapsules of 1 - 100 micron in size that have a liquid core made of a hydrophobic material including a perfume substance and a capsule envelope, which can be obtained by i) radical polymerization of ethylenically unsaturated monomers comprising 30 to 100 weight percent of one or more C1 -C24 -alkylester of acrylic and/or methacrylic acid, 0 to 70 weight percent of one bifunctional or polyfunctional monomer, 0 to 40 weight percent of other monomers or ii) acid-induced condensation of melamine formaldehyde precondensates and/or the C1 -C 4 -alkylethers thereof.

Microencapsulates of perfume made by precipitation and deposition of polymers at an interface such as in coacervates, for example are disclosed in GB-A-0 751 600., US-A-3 341 466 and EP-A-0 385 534, or other polymerisation routes such as interfacial condensation as described in US-A-3577515, US-A-2003/0125222, US-A-6020066, WO2003/101606 and/or US-A-5 066 419.

A particularly useful means of encapsulation is using the melamine/urea - formaldehyde condensation reaction as described in US-A-3516941, US-A-5066 419 and US-A-5154842. Such capsules are made by first emulsifying perfume in small droplets in a pre-condensate medium obtained by the reaction of melamine/urea and formaldehyde and then allowing the polymerisation reaction to proceed along with precipitation at the oil-water interface. The encapsulates ranging in size from a few micrometer to a millimeter are then obtained in the form of a suspension in an aqueous medium.

There are numerous disclosures concerning the use of particles in non-aqueous liquids, especially for unit dose applications, e.g., WO-A-2003/48293 and WO-A-02/057402.

Incorporation of such core-in-shell encapsulates in detergent powders is relatively straightforward. The capsule slurries can be mixed with the detergent as is known from US-A-5 066 419 or spray dried and then blended with detergent granules as described in US-A-2003/0125222.

Microcapsule formation is a relatively expensive processing step and this can significantly increase the already high cost of benefit agents such as perfume. Losses of perfume due to breakage of the capsule during formulation, transport and storage can occur. It is therefore important to improve survival, deposition and adherence of the encapsulated perfume during the steps from addition to the formulation through to the end of a laundering process.

Core-shell encapsulation, as used in the present invention is not the only method known for the encapsulation of benefit agents. Other methods include adsorption onto a porous material such as a zeolite which may then be coated with a water soluble shell to prevent premature release of the perfume.

Many approaches are known for the improvement of deposition of materials in the wash. EP1432782 is directed to a water dispersible particle comprising a deposition enhancing part of one or more polymeric units and a benefit agent attached to the deposition enhancing part. Preferably the deposition aid has a hydrolysable group (based on esters), such as Cellulose Mono-Acetate (CMA). The CMA grafted materials exhibit enhanced wash deposition.

WO2004/056890 is directed towards a process for the preparation of polysaccharide grafted latex particles, which comprises conventional emulsion polymerisation, and to the materials thus produced. The particles have been used as carriers for benefit agents, including softeners, for deposition under main wash conditions.

### Definition of the Invention

We have now determined that improved benefit-agent containing particulates can be formed by polymerisation of outer shells around preformed particulates in which the outer shell contains a polymer, preferably a polysaccharide, which is capable of binding to cellulose.

Accordingly, a first aspect of the invention provides an encapsulate comprising a benefit agent core, one or more inner shells and an outer shell comprising a structural polymer derived from ethylenically unsaturated monomers capable of undergoing addition polymerisation and an uncharged polysaccharide which is substantive to cellulose, at least one of said shells being impermeable to the benefit agent, and the core being formed prior to the shells.

A further aspect of the present invention comprises a method for treating cellulosic textile articles which comprises laundering the articles in the presence of the aforementioned benefit-agent encapsulates.

A further aspect of the present invention comprises a laundry treatment composition which comprises the aforementioned benefit-agent encapsulates and at least one detergent or at least one fabric conditioner.

The presence of the cellulose-substantive polymer in the outer shell makes the core-shell encapsulates substantive to cotton and regenerated cellulose containing articles, this assists in the deposition of the encapsulates during the wash and the retention of the encapsulates on the article being washed. During subsequent use of the articles the benefit agent is released when the shells of the encapsulates are broken.

A particular advantage of having an uncharged polymer is that it does not interact with other formulation components through anionic-cationic binding (such as would be the case with cationic polymers and anionic surfactants). Polymers without cationic groups are also generally envisaged to be less toxic and less prone to malodor production.

It is particularly preferable that the benefit agent comprises perfume components. It is particularly advantageous that as compared with 'off the shelf' perfume encapsulates, the encapsulates of the present invention deliver more perfume impact

### Detailed Description of the Invention

In order that the present invention may be better understood certain preferred and optional features of the invention will now be described:
The pre-formed particle:
   As mentioned above the pre-formed particle is a core-shell encapsulate Such encapsulates, particularly those in which the benefit agent is a perfume, are available in the marketplace or may be manufactured

Examples of perfume capsules which are available in the marketplace include 'Bayscent Lemon' (TM ex. Lanxess, previously Bayer Chemicals). It is sold as a 50% water based dispersion of a polyurethane encapsulate containing a liquid lemon fragrance oil. The perfume level of which is typically around 40-50%.

The manufacture of encapsulate particles is described in a number of patents. These particles may have a simple single shell or the shell may be made up of layers providing, for example, water-insolubility, structural strength and impermeability. It is however commonplace for a single shell to provide all of these features.

It is preferable that the pre-formed particle has an existing shell, which is both water-insoluble and impermeable to the benefit agent (such as perfume). However it is envisaged that the shell of the preformed particle may be permeable to the benefit agent but provide physical stability to the pre-formed particle, with the outer shell adding both the affinity for cellulose and the impermeability.

Preferred pre-formed particles are the so-called polyurethane, polymethyl-methacrylate, melamine-urea or melamine-formaldehyde encapsulates. These can be formed by interfacial polymerisation as is known in the art. The preformed capsules can also be co-acervate derived particles where the shell is formed from anionic and cationic polymers in complex form.

### The outer shell:

The structural polymer used in the outer shell of encapsulates according to the present invention can comprise a wide range of monomeric units containing at least one ethylenically unsaturated group capable of undergoing addition polymerisation. By "monomer units" as used herein is meant the monomeric units of the polymer chain, thus references to "a polymer comprising insoluble monomer units" as used herein means that the polymer is derived from insoluble monomers, and so forth.

Suitable classes of monomers are given in the group consisting of olefins, ethylene, vinylaromatic monomers, esters of vinyl alcohol with mono- and di-carboxylic acids, esters of, -monoethylenically unsaturated mono- and dicarboxylic acids with alcohols, nitriles of , - monoethylenically unsaturated carboxylic acids, conjugated dienes, , -monoethylenically unsaturated monocarboxylic and dicarboxylic acids and their amides, methacrylic acid and its esters with alcohols and diols, acrylic acid and its esters with alcohols and diols, dimethyl or di-n-butyl maleate, and vinyl-sulfonic acid and its water-soluble salts, and mixtures thereof.

The shell may optionally comprise monomers which are crosslinkers. Such crosslinkers may have at least two nonconjugated ethylenically unsaturated double bonds. Examples are alkylene glycol diacrylates and dimethacrylates. A further type of suitable cross-linking monomers are those that are conjugated, such as divinyl benzene. If present, these monomers constitute from 0.1 to 10 % by weight, based on the total amount of monomers to be polymerised in the shell. The level of cross-linker can be used to control the breakage strength of the shell.

The monomers are more preferably selected from the following:-
a) vinyl octate; Vinyl decanote; vinyl laurate; vinyl stearate; esters of acrylic, methacrylic, maleic, fumaric or itaconic acid with decyl, dodecyl, tetadecyl, hexadecyl and octadecyl alcohol,
b) styrene; -methylstyrene; o-chlorostyrene vinyl acetate; vinyl propionate; vinyl n-butyrate; esters of acrylic, methacrylic, maleic, fumaric or itaconic acid with methyl, ethyl, n-butyl, isobutyl, n-hexyl and 2-ethylhexyl alcohol; 1,3-butadiene; 2,3 dimethyl butadiene; and isoprene,
c) acrylic acid, methacrylic acid, maleic acid, fumaric acid, itaconic acid, poly (alkylene oxide) monoacrylates and monomethacrylates, N-vinyl-pyrrolidone, methacrylic and acrylic acid, 2-hydroxyethyl acrylates and methacrylates, glycerol acrylates and methacrylates, poly(ethylene glycol) methacrylates and acrylates, n-vinyl pyrrolidone, acryloyl morpholine, vinyl formamide, n-vinyl acetamide and vinyl caprolactone, acrylonitrile (71 g/l), acrylamide, and methacrylamide at levels of less than 10 % by weight of the monomer unit content of the particle; 2-(dimethylamino) ethyl methacrylate, 2-(diethylamino) ethyl methacrylate, 2-(tert-butylamino) ethyl methacrylate, 2 - aminoethyl methacrylate, 2-(2-oxo-1-imidazolidinyl) ethyl methacrylate, vinyl pyridine, vinyl carbazole, vinyl imidazole, vinyl aniline, and their cationic forms after treatment with alkyl halides;
d) vinyltoluenes, divinyl benzene, ethylene glycol diacrylate, 1,2-propylene glycol diacrylate, 1,3-propylene glycol diacrylate, 1,3-butylene glycol diacrylate, 1,4-butylene glycol diacrylates, ethylene glycol dimethacrylate, 1,2-propylene glycol dimethacrylate, 1,3-propylene glycol dimethacrylate, 1,3-butylene glycol dimethacrylate, 1,4-butylene glycol dimethacrylate, divinylbenzene, vinyl methacrylate, vinyl acrylate, allyl methacrylate, allyl acrylate, diallyl maleate, diallyl fumarate, methylenebisacrylamide, cyclopentadienyl acrylate, and triallyl cyanurate.

Particles of the invention can be optionally comprise monomer units which are derived from monomers of solubility of greater than about 30 g/litre, preferably greater than 35 g/litre, for example 40 to 45 g/litre in water (distilled or equivalent) at 25°C. Such monomers may be utilised in a monomer mixture at levels of up to 10 % based on weight of monomers used.

### The cellulose binding polymer:

As noted above, the outer shell is formed in the presence of an uncharged polysaccharide cellulose-binding polymer. The presence of this cellulose-binding polymer in the outer shell is believed to provide encapsulates with their affinity for cotton and other cellulosic materials.

The polysaccharide preferably has a ß-1,4-linked backbone.

Preferably the polysaccharide is a cellulose, a cellulose derivative, or another ß-1,4-linked polysaccharide having an affinity for cellulose, such as polymannan, polyglucan, polyglucomannan, polyxyloglucan and polygalactomannan or a mixture thereof.

The polysaccharide may gain its affinity for cellulose upon hydrolysis, such as is the case with cellulose mono-acetate or, preferably, may have a natural affinity for cellulose.

Preferably, the polysaccharide is selected from the group consisting of polyxyloglucan and polygalactomannan. Naturally-occuring polymers or the shorter hydrolysis products of naturally occurring polymers are particularly preferred. For example, preferred polysaccharides are locust bean gum, tamarind xyloglucan, guar gum or mixtures thereof. Preferred molecular weights for the polymers fall in the range 40kDalton-1MDalton

In a particularly preferred embodiment the polysaccharide is locust bean gum (LBG). This does not hydrolyse and has a natural affinity for cellulose. LBG is (also called Carob bean gum and Carubin) is extracted from the seed (kernels) of the carob tree (Ceratonia siliqua).

Preferably, the polysaccharide backbone has only ß-1,4 linkages. Optionally, the polysaccharide has linkages in addition to the ß-1,4 linkages, such as ß-1,3 linkages. Thus, optionally some other linkages are present. Polysaccharide backbones which include some material which is not a saccharide ring are also within the ambit of the present invention (whether terminal or within the polysaccharide chain).

The polysaccharide may be straight or branched. Many naturally occurring polysaccharides have at least some degree of branching, or at any rate at least some saccharide rings are in the form of pendant side groups (which are therefore not in themselves counted in determining the degree of substitution) on a main polysaccharide backbone.

Preferably, the polysaccharide is present at levels of between 0.1% to 20% w/w by weight of the total amount of monomer in the outer shell. Particularly preferred levels are 1-3% w/w where sufficient affinity is obtained without excessive use of polysaccharide.

### The benefit agent:

The core of the encapsulate comprises a benefit agent. When used in laundering, the core-shell polymer particle deposits onto the fabric. The core-shell polymer particle may therefore be used in the treatment of fabric. Such treatment may provide a softening, conditioning, lubricating, crease reducing, ease of ironing, moisturising, colour preserving and/or anti-pilling, quick drying, UV protecting, shape retaining, soil releasing, texturising, insect repelling, fungicidal, dyeing and/or fluorescent benefit to the fabric. However, the preferred benefit is the delivery of perfume.

The core shell polymer particle may be incorporated into a laundry treatment composition and used in the treatment of cotton-containing fabric.

The core shell polymer particle may confer a protection benefit to the benefit agent from the action of surfactants. The protection is conferred before and after the benefit agent has been deposited onto a surface. For example, during a laundry process, whilst the particle is present in the wash liquor, the polymer keeps the benefit agent bound up within the particle thereby preventing it from being leached out of the particle by the surfactants, thus keeping it available for deposition onto the fabric. After deposition of the particle onto fabric, the polymer in the core protects the benefit agent from being washed away by surfactants, thus enhancing longevity of substantivity of the benefit agent to the fabric.

A wide range of benefit agents may be used in the present invention. Suitably, the benefit agent may be selected from the group consisting of fabric softeners, conditioners, soil release polymers, shape retention agents, anti-crease agents, ease of ironing aids, quick drying aids, lubricants, texturising agents, insecticides, insect repellents, fungicides, photofading inhibitors, dyes, pigments, fluorescers, and sunscreens, or mixtures thereof. Benefit agents are preferably chemical and/or mechanical protective agents, such as fabric softeners, conditioners, shape retention agents, anti-crease agents, ease of ironing aids, lubricants, texturising agents, insecticides, insect repellents, fungicides, photofading inhibitors and sunscreens, or mixtures thereof. Cosmetic and pharmaceutical benefit agents may also be used.

The benefit agent may be a lubricant, such as a silicone, mineral oil, vegetable oil and sugar polyester. The benefit agent is preferably a biodegradeable lubricant, such as vegetable oils and sugar polyesters. A highly preferred lubricant in the context of the present invention is a sugar polyester (SPE). They are known in fabric conditioners and/or softeners. These materials are non-toxic and inherently biodegradable.

Typically these materials are the products obtainable by esterification of a sugar, such as a saccharide (or other cyclic polyol), with a fatty material. In the context of the invention, the sugar is preferably a disaccharide, preferably sucrose, that is esterified with fatty acid, wherein the degree of esterification is from 1 (mono) to 8 (octa). The fatty acid preferably has a chain length of from C12 to C22 and may be monounsaturated. Examples of suitable fatty acids are Lauric (C12), Myristic(C14), Palmitic(C16), Stearic(C18), Oleic(C18:1), Behenic(C22) and Erucic(C22:1).

The Hydrophilic-Lipophilic Balance (HLB) value of the SPE's that are suitable for use in the invention are suitably from 0 to 4, preferably from 0 to 2. HLB is a well known parameter to those skilled in the art and a literature reference is: "Modern Aspects of Emulsion Science", The Royal Society of Chemistry, 1998, page 179.

Sugar polyesters can be represented by the formula below:-

C₁₂H₁₄O₃(OR)ₙ(OH)₈₋ₙ

where R = COCₙH₂ₙ₊₁ or COCₙH₂ₙ₋₁ (for monounsaturated fatty acids)

Preferred sugar polyesters are sucrose polyesters. Preferred sucrose polyesters are selected from sucrose tetrastearate and sucrose tetraerucate, sucrose tetralaurate, sucrose tetraoleate, sucrose tetrapalmitate and sucrose tetrapalm kernal, most preferably sucrose tetraerucate. It should be noted that these sucrose polyesters normally contain a spread of degree of substitution on the saccharide rings, for example, sucrose tetrastearate also comprises tristearate, pentastearate, hexastearate, etc. Furthermore, the sugar polyesters may contain traces of surfactant which is separate from the main surfactant and the co-surfactant. The SPE can be a mixture of different fatty acids, such as a mixture of oleate and stearate, for example, palm kernal contains a mixture of lauric acid, stearic acid, myristic acid, palmitic acid and oleic acid.

A highly preferred sugar polyester for use in the present invention is ER-290 ex Mitsubishi Ryoto, which is a sucrose tetraerucate and according to the manufacturers spec is mainly Pentaerucate, Tetraerucate and Hexaerucate and has a HLB value of 2.

The lubricant (such as a sugar polyester) can be incorporated into the core at a wide range of levels. For example, of from 0.1 to 99 %, preferably from 50 to 99 % by weight of the total core.

Further suitable lubricants are amino functional silicone oils such as Rhodorsil Oil Extrasoft supplied by Rhodia Silicones. Other silicones may be selected from those disclosed GB1,549,180A, EP459,821A2 and EP459822A. Other suitable lubricants include any of those known for use as dye bath lubricants in the textile industry.

As noted above, particularly preferred benefit agents are perfumes. As also noted above, pre-formed encapsulated perfumes are available in the marketplace.

Useful components of the perfume include materials of both natural and synthetic origin. They include single compounds and mixtures. Specific examples of such components may be found in the current literature, e.g., in Fenaroli's Handbook of Flavor Ingredients, 1975, CRC Press; Synthetic Food Adjuncts, 1947 by M. B. Jacobs, edited by Van Nostrand; or Perfume and Flavor Chemicals by S. Arctander 1969, Montclair, N.J. (USA). These substances are well known to the person skilled in the art of perfuming, flavoring, and/or aromatizing consumer products, i.e., of imparting an odor and/or a flavor or taste to a consumer product traditionally perfumed or flavored, or of modifying the odor and/or taste of said consumer product.

By perfume in this context is not only meant a fully formulated product fragrance, but also selected components of that fragrance, particularly those which are prone to loss, such as the so-called 'top notes'.

Top notes are defined by Poucher (Journal of the Society of Cosmetic Chemists 6(2):80 [1955]). Examples of well known top-notes include citrus oils, linalool, linalyl acetate, lavender, dihydromyrcenol, rose oxide and cis-3-hexanol. Top notes typically comprise 15-25%wt of a perfume composition and in those embodiments of the invention which contain an increased level of top-notes it is envisaged at that least 20%wt would be present within the encapsulate.

Typical perfume components which it is advantageous to encapsulate, include those with a relatively low boiling point, preferably those with a boiling point of less than 300, preferably less than 250 Celsius. It is also advantageous to encapsulate perfume components which have a low LogP (ie. those which will be partitioned into water), preferably with a LogP of less than 3.0. These materials, of relatively low boiling point and relatively low LogP have been called the "delayed blooming" perfume ingredients and include the following materials:
Allyl Caproate
Amyl Acetate
Amyl Propionate
Anisic Aldehyde
Anisole
Benzaldehyde
Benzyl Acetate
Benzyl Acetone
Benzyl Alcohol
Benzyl Formate
Benzyl Iso Valerate
Benzyl Propionate
Beta Gamma Hexenol
Camphor Gum
Laevo-Carvone
d-Carvone
Cinnamic Alcohol
Cinamyl Formate
Cis-Jasmone
cis-3-Hexenyl Acetate
Cuminic Alcohol
Cyclal C
Dimethyl Benzyl Carbinol
Dimethyl Benzyl Carbinol Acetate
Ethyl Acetate
Ethyl Aceto Acetate
Ethyl Amyl Ketone
Ethyl Benzoate
Ethyl Butyrate
Ethyl Hexyl Ketone
Ethyl Phenyl Acetate
Eucalyptol
Eugenol
Fenchyl Acetate
Flor Acetate (tricyclo Decenyl Acetate)
Frutene (tricyclco Decenyl Propionate)
Geraniol
Hexenol
Hexenyl Acetate
Hexyl Acetate
Hexyl Formate
Hydratropic Alcohol
Htdroxycitronellal
Indone
Isoamyl Alcohol
Iso Menthone
Isopulegyl Acetate
Isoquinolone
Ligustral
Linalool
Linalool Oxide
Linalyl Formate
Menthone
Menthyl Acetphenone
Methyl Amyl Ketone
Methyl Anthranilate
Methyl Benzoate
Methyl Benyl Acetate
Methyl Eugenol
Methyl Heptenone
Methyl Heptine Carbonate
Methyl Heptyl Ketone
Methyl Hexyl Ketone
Methyl Phenyl Carbinyl Acetate
Methyl Salicylate
Methyl-N-Methyl Anthranilate
Nerol
Octalactone
Octyl Alcohol
p-Cresol
p-Cresol Methyl Ether
p-Methoxy Acetophenone
p-Methyl Acetophenone
Phenoxy Ethanol
Phenyl Acetaldehyde
Phenyl Ethyl Acetate
Phenyl Ethyl Alcohol
Phenyl Ethyl Dimethyl Carbinol
Prenyl Acetate
Propyl Bornate
Pulegone
Rose Oxide
Safrole
4-Terpinenol
Alpha-Terpinenol
Viridine

It is commonplace for a plurality of perfume components to be present in a formulation. In the encapsulates of the present invention it is envisaged that there will be four or more, preferably five or more, more preferably six or more or even seven or more different perfume components from the list given of delayed blooming perfumes given above present in the encapsulated perfume.

Another group of perfumes with which the present invention can be applied are the so-called 'aromatherapy' materials. These include many components also used in perfumery, including components of essential oils such as Clary Sage, Eucalyptus, Geranium, Lavender, Mace Extract, Neroli, Nutmeg, Spearmint, Sweet Violet Leaf and Valerian. By means of the present invention these materials can be transferred to textile articles that will be worn or otherwise come into contact with the human body (such as handkerchiefs and bedlinen).

Particularly preferred encapsulates are those in which the core comprises perfume components as a benefit agent and the outer polymeric shell comprises a cellulose-binding polysaccharide is selected from the group of locust bean gum, tamarind xyloglucan, guar gum or mixtures thereof.

### Manufacture:

The preferred process for the manufacture of encapsulates according to the present invention is radical polymerisation of an outer shell around an existing encapsulate.

The shell-forming polymers mentioned above, particularly vinyl acetates, are suitable for radical polymerisation. Those skilled in the art will recognise that a chemical initiator will generally be required but that there are instances in which alternative forms of initiation will be possible, e.g. ultrasonic initiation or initiation by irradiation.

A preferred process comprises the steps of:
(i) obtaining an encapsulated benefit agent,
(ii) suspending the encapsulated benefit agent in a aqueous medium which is preferably free of added surfactants and contains both the monomer and the cellulose-binding polysaccharide,
(iii) adding an initiator such that polymerisation proceeds.

In a typical embodiment the reaction mixture is heated to 50-100 Celsius to facilitate polymerisation over a period of 1-5 hours.

The initiator is preferably a chemical or chemicals capable of forming free radicals. Typically, free radicals can be formed either by homolytic scission (i.e. homolysis) of a single bond or by single electron transfer to or from an ion or molecule (e.g. redox reactions).

Suitably, in context of the invention, homolysis may be achieved by the application of heat (typically in the range of from 50 to100°C). Some examples of suitable initiators in this class are those possessing peroxide (-O-O-) or azo (-N=N-) groups, such as benzoyl peroxide, t-butyl peroxide, hydrogen peroxide, azobisisobutyronitrile and ammonium persulphate. Homolysis may also be achieved by the action of radiation (usually ultraviolet), in which case it is termed photolysis. Examples are the dissociation of 2,2'-azobis (2-cyanopropane) and the formation of free radicals from benzophenone and benzoin.

Redox reactions can also be used to generate free radicals. In this case an oxidising agent is paired with a reducing agent which then undergo a redox reaction. Some examples of appropriate pairs in the context of the invention are ammonium persulphate/ sodium metabisulphite, cumyl hydroperoxide/ ferrous ion and hydrogen peroxide/ ascorbic acid.

Preferred initiators are selected from the following:
- Homolytic:: benzoyl peroxide, t-butyl peroxide, hydrogen peroxide, azobisisobutyronitrile, ammonium persulphate, 2,2'-azobis (cyanopropane), benzophenone, benzoin,
- Redox:: ammonium persulphate/ sodium metabisulphite mixture, cumyl hydroperoxide/ ferrous ion mixture and/or hydrogen peroxide/asorbic acid mixture. Preferred initiators are ammonium persulphate and hydrogen peroxide/asorbic acid mixture.

The preferred level of initiator is in the range of from 0.1 to 5.0 % w/w by weight of monomer, more preferably, the level is in the range of from 1.0 to 3.0 % w/w by weight of monomer.

Where the benefit agent is SPE, the preferred initiator is ammonium persulphate and the aqueous phase is buffered with sodium bicarbonate.

Chain transfer agents can optionally be used to reduce the degree of polymerisation and hence the final molecular weight of the polymer. A chain transfer agent contains very labile hydrogen atoms that are easily abstracted by a propagating polymer chain. This terminates the polymerisation of the growing polymer, but generates a new reactive site on the chain transfer agent that can then proceed to initiate further polymerisation of the remaining monomer. Chain transfer agents in the context of the invention typically contain thiol (mercaptan) functionality and can be represented by the general chemical formula RS-H, such as n-dodecyl mercaptan and 2-mercaptoethanol.

Preferred chain transfer agents are mono-thioglycerol and n-dodecyl mercaptan, used at levels of, preferably from 0 to 5 % w/w based on the weight of the monomer and more preferably at a level of 0.25 % w/w based on the weight of the monomer.

It is believed that the cellulose-binding polysaccharide can take a useful part in the polymerisation reaction. Without wishing to be bound by theory, it is believed that in the presence of the initiator the polysaccharide become radically active and the species formed can both initiate and terminate the radical chain propagation. This is believed to result in the covalent attachment of the polysaccharide to the particle surface, in addition to entrapment or physical adsorption on the polymer as it is being formed from the monomers.

The ratio of encapsulate to coating is preferably better than 40:60, and more preferably 50:50 or better. Typically, the ratio will lie in the range 50:50 to 90:10. Above 90:10 there is reduced deposition.

The particle size of the coated encapsulates are typically 1-30 microns. Larger particles begin to be visible to the unaided eye, whereas smaller particles tend to be removed in the wash. Particles of around 5-15 microns are invisible to the eye and exhibit good filtration onto fabrics.

### Laundry Treatment Compositions:

The core shell polymer particles of the invention may be incorporated into laundry compositions.

The core shell polymer particles are typically included in said compositions at levels of from 0.001% to 10%, preferably from 0.005% to 5%, most preferably from 0.01% to 3% by weight of the total composition.

The active ingredient in the compositions is preferably a surface active agent or a fabric conditioning agent. More than one active ingredient may be included. For some applications a mixture of active ingredients may be used.

The compositions of the invention may be in any physical form e.g. a solid such as a powder or granules, a tablet, a solid bar, a paste, gel or liquid, especially, an aqueous based liquid. In particular the compositions may be used in laundry compositions, especially in liquid, powder or tablet laundry composition.

The compositions of the present invention are preferably laundry compositions, especially main wash (fabric washing) compositions or rinse-added softening compositions. The main wash compositions may include a fabric softening agent and the rinse-added fabric softening compositions may include surface-active compounds, particularly non-ionic surface-active compounds.

The detergent compositions of the invention may contain a surface-active compound (surfactant) which may be chosen from soap and non-soap anionic, cationic, non-ionic, amphoteric and zwitterionic surface-active compounds and mixtures, thereof. Many suitable surface-active compounds are available and are fully described in the literature, for example, in "Surface-Active Agents and Detergents", Volumes I and II, by Schwartz, Perry and Berch (Wiley Interscience).

The preferred detergent-active compounds that can be used are soaps and synthetic non-soap anionic, and non-ionic compounds.

The compositions of the invention may contain linear alkylbenzene sulphonate, particularly linear alkylbenzene sulphonates having an alkyl chain length of from C8 to C15. It is preferred if the level of linear alkylbenzene sulphonate is from 0 wt% to 30 wt%, more preferably from 1 wt% to 25 wt%, most preferably from 2 wt% to 15 wt%, by weight of the total composition.

The compositions of the invention may contain other anionic surfactants in amounts additional to the percentages quoted above. Suitable anionic surfactants are well-known to those skilled in the art. Examples include primary and secondary alkyl sulphates, particularly C8 to C15 primary alkyl sulphates; alkyl ether sulphates; olefin sulphonates; alkyl xylene sulphonates; dialkyl sulphosuccinates; and fatty acid ester sulphonates. Sodium salts are generally preferred.

The compositions of the invention may also contain non-ionic surfactant. Nonionic surfactants that may be used include the primary and secondary alcohol ethoxylates, especially the C8 to C20 aliphatic alcohols ethoxylated with an average of from 1 to 40 moles of ethylene oxide per mole of alcohol, and more especially the C10 to C15 primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxyamides (glucamide).

It is preferred if the level of non-ionic surfactant is from 0 wt% to 30 wt%, preferably from 1 wt% to 25 wt%, most preferably from 2 wt% to 15 wt%, by weight of the total composition.

Any conventional fabric conditioning agent may be used in the compositions of the present invention. The conditioning agents may be cationic or non-ionic. If the fabric conditioning compound is to be employed in a main wash detergent composition the compound will typically be non-ionic. For use in the rinse phase, typically they will be cationic. They may for example be used in amounts from 0.5% to 35%, preferably from 1% to 30% more preferably from 3% to 25% by weight of the composition.

Suitable cationic fabric softening compounds are substantially water-insoluble quaternary ammonium materials comprising a single alkyl or alkenyl long chain having an average chain length greater than or equal to C20 or, more preferably, compounds comprising a polar head group and two alkyl or alkenyl chains having an average chain length greater than or equal to C14. Preferably the fabric softening compounds have two long chain alkyl or alkenyl chains each having an average chain length greater than or equal to C16. Most preferably at least 50% of the long chain alkyl or alkenyl groups have a chain length of C18 or above. It is preferred if the long chain alkyl or alkenyl groups of the fabric softening compound are predominantly linear.

Quaternary ammonium compounds having two long-chain aliphatic groups, for example, distearyldimethyl ammonium chloride and di(hardened tallow alkyl) dimethyl ammonium chloride, are widely used in commercially available rinse conditioner compositions. Other examples of these cationic compounds are to be found in "Surfactants Science Series" volume 34 ed. Richmond 1990, volume 37 ed. Rubingh 1991 and volume 53 eds. Cross and Singer 1994, Marcel Dekker Inc. New York".

Any of the conventional types of such compounds may be used in the compositions of the present invention.

The fabric softening compounds are preferably compounds that provide excellent softening, and are characterised by a chain melting L to L transition temperature greater than 250°C, preferably greater than 350°C, most preferably greater than 450°C. This L to L transition can be measured by differential scanning calorimetry as defined in "Handbook of Lipid Bilayers", D Marsh, CRC Press, Boca Raton, Florida, 1990 (pages 137 and 337).

Substantially water-insoluble fabric softening compounds are defined as fabric softening compounds having a solubility of less than 1 x 10⁻³ wt % in demineralised water at 20°C. Preferably the fabric softening compounds have a solubility of less than 1 x 10⁻⁴ wt%, more preferably from less than 1 x 10⁻⁸ to 1. x 10⁻⁶ wt%.

Especially preferred are cationic fabric softening compounds that are water-insoluble quaternary ammonium materials having two C12-22 alkyl or alkenyl groups connected to the molecule via at least one ester link, preferably two ester links. An especially preferred ester-linked quaternary ammonium material can be represented by the formula:

(R5) (R5) N+ (R7-T-R6) (CH₂)p-T-R6

wherein each R5 group is independently selected from C1-4 alkyl or hydroxyalkyl groups or C2-4 alkenyl groups; each R6 group is independently selected from C8-28 alkyl or alkenyl groups; and wherein R7 is a linear or branched alkylene group of 1 to 5 carbon atoms, T is

-(CO)-O- or -O-(CO)-

and p is 0 or is an integer from 1 to 5.

Di(tallowoxyloxyethyl) dimethyl ammonium chloride and/or its hardened tallow analogue is an especially preferred compound of this formula.

A second preferred type of quaternary ammonium material can be represented by the formula:

(R5)₃N+(CH₂)p CH (OOC R6). CH₂OOCR6

wherein R5, p and R6 are as defined above.

A third preferred type of quaternary ammonium material are those derived from triethanolamine (hereinafter referred to as 'TEA quats') as described in for example US 3915867 and represented by formula:

(TOCH₂CH₂)₃N+ (R9)

wherein T is H or (R8-CO-) where R8 group is independently selected from C8-28 alkyl or alkenyl groups and R9 is C1-4 alkyl or hydroxyalkyl groups or C2-4 alkenyl groups. For example N-methyl-N,N,N-triethanolamine ditallowester or dihardened-tallowester quaternary ammonium chloride or methosulphate. Examples of commercially available TEA quats include Rewoquat WE18 and Rewoquat WE20, both partially unsaturated (ex. WITCO), Tetranyl AOT-1, fully saturated (ex. KAO) and Stepantex VP 85, fully saturated (ex. Stepan).

It is advantageous if the quaternary ammonium material is biologically biodegradable.

Preferred materials of this class such as 1,2-bis(hardened tallowoyloxy)-3-trimethylammonium propane chloride and their methods of preparation are, for example, described in US 4 137 180 (Lever Brothers Co). Preferably these materials comprise small amounts of the corresponding monoester as described in US 4 137 180, for example, 1-hardened tallowoyloxy-2-hydroxy-3-trimethylammonium propane chloride.

Other useful cationic softening agents are alkyl pyridinium salts and substituted imidazoline species. Also useful are primary, secondary and tertiary amines and the condensation products of fatty acids with alkylpolyamines.

The compositions may alternatively or additionally contain water-soluble cationic fabric softeners, as described in GB 2 039 556B (Unilever).

The compositions may comprise a cationic fabric softening compound and an oil, for example as disclosed in EP-A-0829531.

The compositions may alternatively or additionally contain nonionic fabric softening agents such as lanolin and derivatives thereof.

Lecithins and other phospholipids are also suitable softening compounds.

In fabric softening compositions nonionic stabilising agent may be present. Suitable nonionic stabilising agents may be present such as linear C8 to C22 alcohols alkoxylated with 10 to 20 moles of alkylene oxide, C10 to C20 alcohols, or mixtures thereof. Other stabilising agents include the deflocculating polymers as described in EP 0415698A2 and EP 0458599 B1.

Advantageously the nonionic stabilising agent is a linear C8 to C22 alcohol alkoxylated with 10 to 20 moles of alkylene oxide. Preferably, the level of nonionic stabiliser is within the range from 0.1 to 10% by weight, more preferably from 0.5 to 5% by weight, most preferably from 1 to 4% by weight. The mole ratio of the quaternary ammonium compound and/or other cationic softening agent to the nonionic stabilising agent is suitably within the range from 40:1 to about 1:1, preferably within the range from 18:1 to about 3:1.

The composition can also contain fatty acids, for example C8 to C24 alkyl or alkenyl monocarboxylic acids or polymers thereof. Preferably saturated fatty acids are used, in particular, hardened tallow C16 to C18 fatty acids. Preferably the fatty acid is non-saponified, more preferably the fatty acid is free, for example oleic acid, lauric acid or tallow fatty acid. The level of fatty acid material is preferably more than 0.1% by weight, more preferably more than 0.2% by weight. Concentrated compositions may comprise from 0.5 to 20% by weight of fatty acid, more preferably 1% to 10% by weight. The weight ratio of quaternary ammonium material or other cationic softening agent to fatty acid material is preferably from 10:1 to 1:10.

It is also possible to include certain mono-alkyl cationic surfactants which can be used in main-wash compositions for fabrics. Cationic surfactants that may be used include quaternary ammonium salts of the general formula R1R2R3R4N+ X- wherein the R groups are long or short hydrocarbon chains, typically alkyl, hydroxyalkyl or ethoxylated alkyl groups, and X is a counter-ion (for example, compounds in which R1 is a C8-C22 alkyl group, preferably a C8-C10 or C12-C14 alkyl group, R2 is a methyl group, and R3 and R4, which may be the same or different, are methyl or hydroxyethyl groups); and cationic esters (for example, choline esters).

The choice of surface-active compound (surfactant), and the amount present, will depend on the intended use of the detergent composition. In fabric washing compositions, different surfactant systems may be chosen, as is well known to the skilled formulator, for handwashing products and for products intended for use in different types of washing machine.

The total amount of surfactant present will also depend on the intended end use and may be as high as 80 wt%, for example, in a composition for washing fabrics by hand. In compositions for machine washing of fabrics, an amount of from 5 to 40 wt% is generally appropriate. Typically the compositions will comprise at least 2 wt% surfactant e.g. 2-60%, preferably 15-40% most preferably 25-35%, by weight of the composition.

Detergent compositions suitable for use in most automatic fabric washing machines generally contain anionic non-soap surfactant, or non-ionic surfactant, or combinations of the two in any suitable ratio, optionally together with soap.

The compositions of the invention, when used as main wash fabric washing compositions, will generally also contain one or more detergency builders, although builder free compositions which use calcium tollerant surfactants are envisaged. Where present, the total amount of detergency builder in the compositions will typically range from 5 to 80 wt%, preferably from 10 to 60 wt%, by weight of the compositions.

Inorganic builders that may be present include sodium carbonate, if desired in combination with a crystallisation seed for calcium carbonate, as disclosed in GB 1 437 950 (Unilever); crystalline and amorphous aluminosilicates, for example, zeolites as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Procter & Gamble); and layered silicates as disclosed in EP 164 514B (Hoechst). Inorganic phosphate builders, for example, sodium orthophosphate, pyrophosphate and tripolyphosphate are also suitable for use with this invention.

The compositions of the invention preferably contain an alkali metal, preferably sodium, aluminosilicate builder. Sodium aluminosilicates may generally be incorporated in amounts of from 10 to 70% by weight (anhydrous basis), preferably from 25 to 50 wt%.

The alkali metal aluminosilicate may be either crystalline or amorphous or mixtures thereof, having the general formula: 0.8-1.5 Na₂O. Al₂O₃. 0.8-6 SiO₂

These materials contain some bound water and are required to have a calcium ion exchange capacity of at least 50 mg CaO/g. The preferred sodium aluminosilicates contain 1.5-3.5 SiO2 units (in the formula above). Both the amorphous and the crystalline materials can be prepared readily by reaction between sodium silicate and sodium aluminate, as amply described in the literature. Suitable crystalline sodium aluminosilicate ion-exchange detergency builders are described, for example, in GB 1 429 143 (Procter & Gamble). The preferred sodium aluminosilicates of this type are the well-known commercially available zeolites A and X, and mixtures thereof.

The zeolite may be the commercially available zeolite 4A now widely used in laundry detergent powders. However, according to a preferred embodiment of the invention, the zeolite builder incorporated in the compositions of the invention is maximum aluminium zeolite P (zeolite MAP) as described and claimed in EP 384 070A (Unilever). Zeolite MAP is defined as an alkali metal aluminosilicate of the zeolite P type having a silicon to aluminium weight ratio not exceeding 1.33, preferably within the range of from 0.90 to 1.33, and more preferably within the range of from 0.90 to 1.20.

Especially preferred is zeolite MAP having silicon to aluminium weight ratio not exceeding 1.07, more preferably about 1.00. The calcium binding capacity of zeolite MAP is generally at least 150 mg CaO per g of anhydrous material.

Organic builders that may be present include polycarboxylate polymers such as polyacrylates, acrylic/maleic copolymers, and acrylic phosphinates; monomeric polycarboxylates such as citrates, gluconates, oxydisuccinates, glycerol mono-, di and trisuccinates, carboxymethyloxy succinates, carboxymethyloxymalonates, dipicolinates, hydroxyethyliminodiacetates, alkyl- and alkenylmalonates and succinates; and sulphonated fatty acid salts. This list is not intended to be exhaustive.

Especially preferred organic builders are citrates, suitably used in amounts of from 5 to 30 wt%, preferably from 10 to 25 wt%; and acrylic polymers, more especially acrylic/maleic copolymers, suitably used in amounts of from 0.5 to 15 wt%, preferably from 1 to 10 wt%.

Builders, both inorganic and organic, are preferably present in alkali metal salt, especially sodium salt, form.

Compositions according to the invention may also suitably contain a bleach system. Certain combinations of benefit agents and bleach systems are incompatible (for example catalytic bleach systems will react with certain perfume components) and this provides a further advantage for encapsulates of the present invention. Fabric washing compositions may desirably contain peroxy bleach compounds, for example, inorganic persalts or organic peroxyacids, capable of yielding hydrogen peroxide in aqueous solution.

Suitable peroxy bleach compounds include organic peroxides such as urea peroxide, and inorganic persalts such as the alkali metal perborates, percarbonates, perphosphates, persilicates and persulphates. Preferred inorganic persalts are sodium perborate monohydrate and tetrahydrate, and sodium percarbonate.

Especially preferred is sodium percarbonate having a protective coating against destabilisation by moisture. Sodium percarbonate having a protective coating comprising sodium metaborate and sodium silicate is disclosed in GB 2 123 044B (Kao).

The peroxy bleach compound is suitably present in an amount of from 0.1 to 35 wt%, preferably from 0.5 to 25 wt%. The peroxy bleach compound may be used in conjunction with a bleach activator (bleach precursor) to improve bleaching action at low wash temperatures. The bleach precursor is suitably present in an amount of from 0.1 to 8 wt%, preferably from 0.5 to 5 wt%.

Preferred bleach precursors are peroxycarboxylic acid precursors, more especially peracetic acid precursors and pernoanoic acid precursors. Especially preferred bleach precursors suitable for use in the present invention are N,N,N',N',-tetracetyl ethylenediamine (TAED) and sodium nonanoyloxybenzene sulphonate (SNOBS). The novel quaternary ammonium and phosphonium bleach precursors disclosed in US 4 751 015 and US 4 818 426 (Lever Brothers Company) and EP 402 971A (Unilever), and the cationic bleach precursors disclosed in EP 284 292A and EP 303 520A (Kao) are also of interest.

The bleach system can be either supplemented with or replaced by a peroxyacid. examples of such peracids can be found in US 4 686 063 and US 5 397 501 (Unilever). A preferred example is the imido peroxycarboxylic class of peracids described in EP A 325 288, EP A 349 940, DE 382 3172 and EP 325 289. A particularly preferred example is phthalimido peroxy caproic acid (PAP). Such peracids are suitably present at 0.1 - 12%, preferably 0.5 - 10%.

A bleach stabiliser (transition metal sequestrant) may also be present. Suitable bleach stabilisers include ethylenediamine tetra-acetate (EDTA), the polyphosphonates such as Dequest (Trade Mark) and non-phosphate stabilisers such as EDDS (ethylene diamine di-succinic acid). These bleach stabilisers are also useful for stain removal especially in products containing low levels of bleaching species or no bleaching species.

An especially preferred bleach system comprises a peroxy bleach compound (preferably sodium percarbonate optionally together with a bleach activator), and a transition metal bleach catalyst as described and claimed in EP 458 397A, EP 458 398A and EP 509 787A (Unilever).

The compositions according to the invention may also contain one or more enzyme(s).

Suitable enzymes include the proteases, amylases, cellulases, oxidases, peroxidases and lipases usable for incorporation in detergent compositions. Preferred proteolytic enzymes (proteases) are, catalytically active protein materials which degrade or alter protein types of stains when present as in fabric stains in a hydrolysis reaction. They may be of any suitable origin, such as vegetable, animal, bacterial or yeast origin.

Proteolytic enzymes or proteases of various qualities and origins and having activity in various pH ranges of from 4-12 are available and can be used in the instant invention. Examples of suitable proteolytic enzymes are the subtilisins which are obtained from particular strains of B. Subtilis B. licheniformis, such as the commercially available subtilisins Maxatase (Trade Mark), as supplied by Genencor International N.V., Delft, Holland, and Alcalase (Trade Mark), as supplied by Novozymes Industri A/S, Copenhagen, Denmark.

Particularly suitable is a protease obtained from a strain of Bacillus having maximum activity throughout the pH range of 8-12, being commercially available, e.g. from Novozymes Industri A/S under the registered trade-names Esperase (Trade Mark) and Savinase (Trade-Mark). The preparation of these and analogous enzymes is described in GB 1 243 785. Other commercial proteases are Kazusase (Trade Mark obtainable from Showa-Denko of Japan), Optimase (Trade Mark from Miles Kali-Chemie, Hannover, West Germany), and Superase (Trade Mark obtainable from Pfizer of U.S.A.).

Detergency enzymes are commonly employed in granular form in amounts of from about 0.1 to about 3.0 wt%. However, any suitable physical form of enzyme may be used.

The compositions of the invention may contain alkali metal, preferably sodium carbonate, in order to increase detergency and ease processing. Sodium carbonate may suitably be present in amounts ranging from 1 to 60 wt%, preferably from 2 to 40 wt%. However, compositions containing little or no sodium carbonate are also within the scope of the invention.

Powder flow may be improved by the incorporation of a small amount of a powder structurant, for example, a fatty acid (or fatty acid soap), a sugar, an acrylate or acrylate/maleate copolymer, or sodium silicate. One preferred powder structurant is fatty acid soap, suitably present in an amount of from 1 to 5 wt%.

Other materials that may be present in detergent compositions of the invention include sodium silicate; antiredeposition agents such as cellulosic polymers; soil release polymers; inorganic salts such as sodium sulphate; or lather boosters as appropriate; proteolytic and lipolytic enzymes; dyes; coloured speckles; fluorescers, decoupling polymers and non-encapsulated perfume. This list is not intended to be exhaustive. However, many of these ingredients will be better delivered as benefit agent groups in materials produced according to the first aspect of the invention.

The detergent composition when diluted in the wash liquor (during a typical wash cycle) will typically give a pH of the wash liquor from 7 to 10.5 for a main wash detergent.

Particulate detergent compositions are suitably prepared by spray-drying a slurry of compatible heat-insensitive ingredients, and then spraying on or post-dosing those ingredients unsuitable for processing via the slurry. The skilled detergent formulator will have no difficulty in deciding which ingredients should be included in the slurry and which should not.

Particulate detergent compositions of the invention preferably have a bulk density of at least 400 g/litre, more preferably at least 500 g/litre. Especially preferred compositions have bulk densities of at least 650 g/litre, more preferably at least 700 g/litre.

Such powders may be prepared either by post-tower densification of spray-dried powder, or by wholly non-tower methods such as dry mixing and granulation; in both cases a high-speed mixer/granulator may advantageously be used. Processes using high-speed mixer/granulators are disclosed, for example, in EP 340 013A, EP 367 339A, EP 390 251A and EP 420 317A (Unilever).

Liquid detergent compositions can be prepared by admixing the essential and optional ingredients thereof in any desired order to provide compositions containing components in the requisite concentrations. Liquid compositions according to the present invention can also be in compact form which means it will contain a lower level of water compared to a conventional liquid detergent.

Product forms include powders, liquids, gels, tablets, any of which are optionally incorporated in a water-soluble or water dispersible sachet. The means for manufacturing any of the product forms are well known in the art. If the core shell polymer particles are to be incorporated in a powder (optionally the powder to be tableted), and whether or not pre-emulsified, they are optionally included in a separate granular component, e.g. also containing a water soluble organic or inorganic material.

The treatment of the substrate, which is preferably a textile and more preferably a garment with the material of the invention can be made by any suitable method such as washing, soaking or rinsing of the substrate.

Typically the treatment will involve a washing or rinsing method such as treatment in the main wash or rinse cycle of a washing machine and involves contacting the substrate with an aqueous medium comprising the material of the invention.

### Examples

The present invention will now be explained in more detail by reference to the following non-limiting examples. In the examples, the benefit agent is perfume and the cellulose-binding polysaccharide is locust bean gum.

In the following examples where percentages are mentioned, this is to be understood as percentage by weight.

The unmodified pre-formed core used in these examples was 'Bayscent Lemon' (ex. Lanxess, previously Bayer Chemicals). It is 50% water based dispersion of a polyurethane encapsulate containing a liquid lemon fragrance oil. The perfume level of which was 46.1%. Citrus perfumes such as lemon are known to be rich in 'top' notes.

### Comparative Example 1: Synthesis of 50/50 Bayscent Lemon/PVAc Core Shell without LBG

This examples describes the synthesis of a 50% Bayscent Lemon Core - 50% PVAc shell particles sample with no locust bean gum (LBG) (wash delivery aid) added during the synthesis (Control):
De-ionised water (14.9g), Bayscent Lemon capsules (1.95g) and vinyl acetate (0.9g) were added to a glass chromatography vial (20ml) and the top crimp closed using a vial lid with rubber inset. Aqueous hydrogen peroxide solution (51 µl, 35% active) and aqueous ascorbic acid solution (180µl, 10% active) were both injected into the vial using a Hamilton syringe. The vial was submerged in a water/shaker bath (Stuart Bath SBS 30) at 70°C and agitated (150rpm) for 90 minutes. Aqueous hydrogen peroxide (13µl, 35% active) and aqueous ascorbic acid solution (45µl, 10% active) were then injected into the vial and heating (70°C) and agitation (150rpm) continued for a further 60 minutes. The sample was then removed and allowed to cool to room temperature.

### Example 2: Synthesis of 50/50 Bayscent Lemon/PVAc Core Shell with LBG

This examples describes the synthesis of a 50% Bayscent Lemon Core - 50% LBG-PVAc shell particles sample with locust bean gum (LBG) (wash delivery aid) added during the synthesis.

The synthesis was similar sample to that detailed in Example 1, except that aqueous locust bean gum solution (1.8g, 1% active) was also added to the vial prior to injection of hydrogen peroxide and ascorbic acid initiator solutions. The initial de-ionised water level was also reduced to 13.1g. The 1% LBG solution was prepared by adding locust bean gum (0.5g) to boiled de-ionised water (49.5g) and mixing with a high speed homogeniser (Silverson) at 10,000rpm for 15 minutes until the LBG completely solubilised.

### Comparitive Example A

A comparative control sample in which the aqueous LBG solution was merely added to the unmodified Bayscent Capsules at a level equivalent to that used above (i.e. 1% on particle solids) was also prepared.

### Example 3: Wash Deposition of Unmodified Bayscent Lemon, Comparitive Example A, Example 1 and 2 onto cotton

Using a UV-visible Spectrophotometer linear calibration plots for absorbance at 400 nm versus solution concentration of unmodified and modified Bayscent Lemon capsule was found to exist for polymer particle concentrations below 500 ppm. A simulated wash was conducted at a concentration of 400ppm of particles in the wash liquor. Using the above calibration plots the fluorescence before and after washing was used to determine the level of particles deposited during the wash. Similarly any fluorescence increase from the rinse solutions was used to assess the particles washed off during the rinse stages. The wash deposition of Unmodified Bayscent Lemon capsules, the comparative Example A in which LBG had been merely added, Example 1 (PVAc only shell) and Example 2 (LBG-PVAc shell) were assessed in a simulated (Linitest) wash:

### The Simulated Wash Process:

### Preparation of stock solutions:

**Surfactant Stock:** (10 g/L 50:50 LAS:A7) was prepared by dissolving Linear Alkyl Benzene Sulphonate (9.09 g LAS (55% Active)) and Synperonic A7 (5 g) in de-ionised water to a total of 1 litre.

**Base Buffer Stock:** (0.1 M) was prepared by dissolving Sodium Carbonate (7.5465 g) and Sodium Hydrogen Carbonate (2.4195 g) in de-ionised water to a total of 1 litre.

### Preparation of the wash liquor:

Base Buffer Stock (12.5 ml) and surfactant stock (12.5 ml) were added to a 500ml Linitest pot and 100 ml de-ionised water was added to produce a wash liquor buffered at pH 10.5 and containing 1 g/L surfactant (50:50 LAS:A7).

### Simulated wash:

0.05 g (400ppm on wash liquor) of polymer particles: Unmodified Bayscent Lemon capsules or the comparative Example A or Example 1 or 2 were each added to the linitest pots containing wash liquor and agitated slightly to ensure mixing. (Washes were done in duplicate for each sample and results averaged). A 5ml aliquot was taken from each and the Absorbance at 400 nm recorded using a 1 cm cuvette. This absorbance value represents 100% particles in the wash solution prior to the simulated simulated wash process.

### Linitest Equipment and Procedure

A section of unfluoresced cotton measuring 20 cm by 20 cm was placed into each linitest pot containing the wash liquor and polymer particles and the pot was sealed.

The Linitest is a laboratory scale washing machine (Ex. Heraeus). The equipment is designed and built to comply with the requirements for international standard test specifications. It is used for small scale detergency and stain removal testing particularly when low liquor to cloth ratios are required.

There are various models of the Linitest commercially available. The model used in this case has a single rotation speed of 40 rpm. The carrier is capable of accommodating twelve 500ml steel containers and can be operated at temperatures up to 100°C.

The Linitest comprises a 20 litre tank, control system and drive mechanism. Permanent thermostatically controlled tubular heating elements in the base of the tank heat the bath liquor to the required temperature. The stainless steel construction throughout ensures efficient heat transfer to the specimen containers that are mounted on a rotating horizontal carrier driven by a geared motor. The rotating movement of the carrier 'throws' the liquid from one end of the container to the other in a continuous action. This movement simulates the mechanical washing process and additional mechanical action can be obtained by using steel ball bearings or discs.

The Linitest pots were attached to the Linitester cradle and rotated 45 minutes at 40°C to simulate the main wash.
The cloths were then removed and wrung by hand and a 5ml aliquot of the remaining wash liquor was taken and the absorbance at 400nm measured using a 1cm cuvette as before. From interpolation of the initial calibration curve, the concentration of the particles remaining the liquor after the wash could be determined and hence the level deposited (wash deposition) on the cloth could be determined by difference.

The Linitest pots were then thoroughly rinsed and the 'wrung' cloths returned to the pots and 125ml of de-ionised water was added. The Linitester bath water was drained and the pots attached to the cradle and rotated for 10 minutes at ambient temperature (∼20°C) to simulate a rinse procedure. The clothes were then removed and wrung by hand. A 5ml aliquot of the rinse solution was taken and the absorbance at 400nm determined. As before interpolation of the initial calibration plot allowed the particle concentration removed from the cloth during the rinse to be determined and by comparison to the initial level deposited prior to the rinse, the percentage loss from the cloth could be determined. This procedure was repeated a further two times to simulate and determine losses from the second and third rinse. The final rinsed cloths were hung up overnight to dry.

The percentage deposition after the main wash and for the three rinses for all samples are shown in Table 1.

**Table 1 -**

| **Wash Deposition and Rinse losses of Unmodified Bayscent Lemon capsules, Comparative Example A and Example 1 and 2 onto Cotton:** | | | | |
|---|---|---|---|---|
| **Polymer Particles Main** | **% Deposited (on initial dose)** | | | |
| | **After Wash** | **After 1^{st} Rinse** | **After 2^{nd} Rinse** | **After 3^{rd} Rinse** |
| Unmodified Bayscent Lemon Capsules | 59.7 | 43.3 | 33.4 | 27.8 |
| Comparative Example A (LBG merely added) | 75.2 | 60.7 | 48.5 | 43.0 |
| Example 1 (PVAc shell) | 73.4 | 60.8 | 54.1 | 47.6 |
| Example 2 (LBG-PVAc shell) | 84.6 | 78.6 | 73.0 | 68.3 |

The results in Table 1 show the much enhanced wash delivery and rinse retention benefit on cotton induced by the formation of a LBG-PVAc shell around the Bayscent Lemon capsules.

### Example 4: Perfume Intensity of Washed Cloths

The washed cloths from Example 3 were rated for perfume intensity using a trained perfume panel who scored each cloth on the follow scale:
0=No smell; 1=Just Detectable; 2=Slight; 3=Moderate, 4=Strong, 5=Very Strong

For the wash in Example 3 above all samples were dosed at the same solids level (i.e. 400ppm) on wash liquor. However Example 1 and 2 particles contain only half the level of perfume (as half the material in each particle is the shell) compared to unmodified Bayscent Lemon or comparative example A. Hence, it was necessary to normalise the perfume scores on the assumption that perfume intensity varies linearly with level present for the unmodified and comparative example A.

The perfume scores for each cloth are shown in Table 2.

**Table 2**

| **Perfume Scores for Washed Cloths (Bayscent Lemon capsules, Comparative Example A and Example 1 and 2)** | |
|---|---|
| **Cloth** | **Perfume Score** |
| Unmodified Bayscent Lemon Capsules | 1.5 |
| Comparative Example A (LBG merely added) | 1.1 |
| Example 1 (PVAc shell) | 1.7 |
| Example 2 (LBG-PVAc shell) | 2.1 |

The results in Table 2 show the enhanced perfume intensity of the Bayscent Lemon Core/ LBG-PVAc shell particles due to the increased delivery to cotton during the wash.

## Claims

1. A core-shell encapsulate comprising a benefit agent core, one or more inner shells and a polymeric outer shell comprising a structural polymer derived from ethylenically unsaturated monomers capable of undergoing addition polymerisation and an uncharged polysaccharide which is substantive to cellulose, at least one of said shells being impermeable to the benefit agent and the core being formed prior to the shells.

2. An encapsulate according to claim 1 wherein the benefit agent comprises a perfume component.

3. An encapsulate according to claim 1 wherein at least one of the one or more inner shells is a melamine-urea or melamine-formaldehyde shell.

4. An encapsulate according to claim 1 wherein the polysaccharide has a ß-1,4-linked backbone.

5. An encapsulate according to claim 4 wherein the polysaccharide is selected from the group consisting of polyxyloglucan and polygalactomannan., preferably being locust bean gum, tamarind xyloglucan, guar gum or mixtures thereof.

6. An encapsulate according to claim 2 wherein the perfume component comprises at least 20%wt top notes.

7. A method for treating cellulosic textile articles which comprises laundering the articles in the presence of an encapsulate according to any one of claims 1-6

8. A laundry treatment composition which comprises an encapsulate according to any one of claims 1-6 and at least one detergent or at least one fabric conditioner.

## Patentansprüche

1. Kern-Schale-Verkapselungsprodukt, umfassend einen Wirkstoffkern, eine oder mehrere innere Schalen und eine polymere Außenschale, umfassend ein strukturelles Polymer, abgeleitet von ethylenisch ungesättigten Monomeren, die fähig sind, eine Additionspolymerisation durchzumachen, und ein ungeladenes Polysaccharid, das substantiv zu Cellulose ist, wobei wenigstens eine der Schalen für den Wirkstoff undurchlässig ist und der Kern vor den Schalen gebildet wird.

2. Verkapselungsprodukt gemäß Anspruch 1, wobei der Wirkstoff eine Parfümkomponente umfasst.

3. Verkapselungsprodukt gemäß Anspruch 1, wobei wenigstens eine der einen oder mehreren inneren Schalen eine Melamin-Harnstoff- oder Melamin-Formaldehyd-Schale ist.

4. Verkapselungsprodukt gemäß Anspruch 1, wobei das Polysaccharid eine β-1,4-verknüpfte Hauptkette hat.

5. Verkapselungsprodukt gemäß Anspruch 4, wobei das Polysaccharid aus der Gruppe, bestehend aus Polyxyloglucan und Polygalactomannan, ausgewählt ist, vorzugsweise Johannisbrotkerngummi, Tamarinden-Xyloglucan, Guar-Gummi oder Gemische davon ist.

6. Verkapselungsprodukt gemäß Anspruch 2, wobei die Parfümkomponente wenigstens 20 Gew.-% Kopfnoten umfasst.

7. Verfahren zur Behandlung von Cellulosetextilartikeln, das das Waschen der Artikel in Gegenwart eines Verkapselungsprodukt gemäß einem der Ansprüche 1 bis 6 umfasst.

8. Wäschebehandlungszusammensetzung, die ein Verkapselungsprodukt gemäß einem der Ansprüche 1 bis 6 und wenigstens ein Waschmittel oder wenigstens einen Weichspüler umfasst.

## Revendications

1. Produit d'encapsulation noyau-enveloppe comprenant un noyau d'agent bénéfique, une ou plusieurs enveloppes internes et une enveloppe externe polymérique comprenant un polymère structurel dérivé de monomères à insaturations éthyléniques susceptibles de subir une polymérisation par addition et un polysaccharide non chargé qui est substantiel à la cellulose, au moins l'une desdites enveloppes étant imperméables à l'agent bénéfique et le noyau étant formé avant les enveloppes.

2. Produit d'encapsulation selon la revendication 1, dans lequel l'agent bénéfique comprend un composant parfumé.

3. Produit d'encapsulation selon la revendication 1, dans lequel au moins une de la ou des enveloppes internes est une enveloppe de mélamine-urée ou de mélamine-formaldéhyde.

4. Produit d'encapsulation selon la revendication 1, dans lequel le polysaccharide a un squelette β-1,4-lié.

5. Produit d'encapsulation selon la revendication 4, dans lequel le polysaccharide est choisi dans le groupe constitué par un polyxyloglucane et un polygalactomannane, de préférence qui est une gomme de caroube, un xyloglucane de tamarin, une gomme de guar ou des mélanges de ceux-ci.

6. Produit d'encapsulation selon la revendication 2, dans lequel le composant parfumé comprend au moins 20 % en poids de notes de tête.

7. Procédé de traitement d'articles textiles cellulosiques qui comprend le lavage des articles en présence d'un produit d'encapsulation selon l'une quelconque des revendications 1 à 6.

8. Composition de traitement du linge qui comprend un produit d'encapsulation selon l'une quelconque des revendications 1 à 6 et au moins un détergent ou au moins un assouplissant de tissu.
